# FASCICULE DE BREVET EUROPEEN

(11) **EP 0 954 217 B1**
(45) Date de publication et mention de la délivrance du brevet: **14.03.2001**
(21) Numéro de dépôt: 97953942.6
(22) Date de dépôt: 24.12.1997
(51) Int. Cl.: A01G 27/00, F04F 10/00

(54) **SIPHON AUTO-AMOR ANT NOTAMMENT POUR IRRIGATION**
SELBSTSAUGENDER SIPHON, INSBESONDERE FUR BEWASSERUNG
SELF-PRIMING SIPHON, IN PARTICULAR FOR IRRIGATION

(30) Priorité: 26.12.1996 FR 9616317; 03.03.1997 FR 9702699; 18.04.1997 FR 9705176; 12.11.1997 FR 9714395; 25.11.1997 FR 9715058
(43) Date de publication de la demande: 10.11.1999
(73) Titulaire: Amsellem, Maurice, 69006 Lyon (FR)
(72) Inventeur: Amsellem, Maurice, 69006 Lyon (FR)
(74) Mandataire: Weydert, Robert
(86) Numéro de dépôt international: FR9702418
(87) Numéro de publication internationale: WO9828967

(56) Documents cités:
- WO-A-87/06095
- DE-U- 9 319 107
- FR-A- 791 997
- FR-A- 2 569 943
- GB-A- 476 609

## Description

La présente invention concerne un siphon auto-amorçant, combinant la capillarité et le siphon, notamment mais pas exclusivement, un dispositif pour arroser des plantes à partir d'une réserve d'eau.

On connaît des dispositifs utilisant la capillarité pour prélever de l'eau dans un récipient. Par exemple le brevet français n° 791.997 décrit un tube en forme de U renversé contenant un corps de dimensions appropriées au fonctionnement de la capillarité. Une des branches du U plonge dans l'eau d'un récipient. Celle-ci, par capillarité monte et franchit la partie haute du tube pour redescendre par l'autre branche du U. Mais dans ces dispositifs connus, l'eau n'arrive pas en quantité suffisante pour remplir tout le tube et provoquer par sa chute une aspiration susceptible d'amorcer le siphon, et le débit d'eau à la sortie du dispositif reste limité à ce que la capillarité peut faire monter jusqu'à la partie haute du tube, sans qu'il puisse jamais y avoir amorçage d'un siphon. Par conséquent, le débit est toujours très réduit, car l'eau descendant vers la sortie ne participe pas à l'aspiration de l'eau qui monte vers le coude.

Il n'existe pas actuellement de dispositif d'arrosage qui combine en même temps les avantages suivants :
Arrosage
- sans apport d'énergie,
- avec un débit réglable de 0 à plusieurs centaines de litres par jour,
- à amorçage et réamorçage facile et automatique du siphon,
- à partir d'un réservoir quelconque (2) dont le niveau est supérieur au point d'écoulement.

La présente invention vise à procurer tous ces avantages.

Pour obtenir ces résultats l'invention fonctionne selon le principe du siphon.

La caractéristique essentielle de l'invention (telle que revendiquée) est que ce siphon est amorcé par une petite quantité de liquide apportée par capillarité le long d'une mèche, jusqu'à l'entrée d'un tuyau dans lequel il peut s'écouler en provocant une aspiration.

### Sur les dessins:

La Figure 1 représente de façon schmématique un dispositif d'arrosage connu;
La Figure 2 représente un premier mode d'exécution d'un dispositif d'arrosage selon l'invention.
Les Figures 3 et 4 représentent une première variante du mode d'exécution de la Figure 2;
La Figure 5 représente une seconde variante du mode d'exécution de la Figure 2;

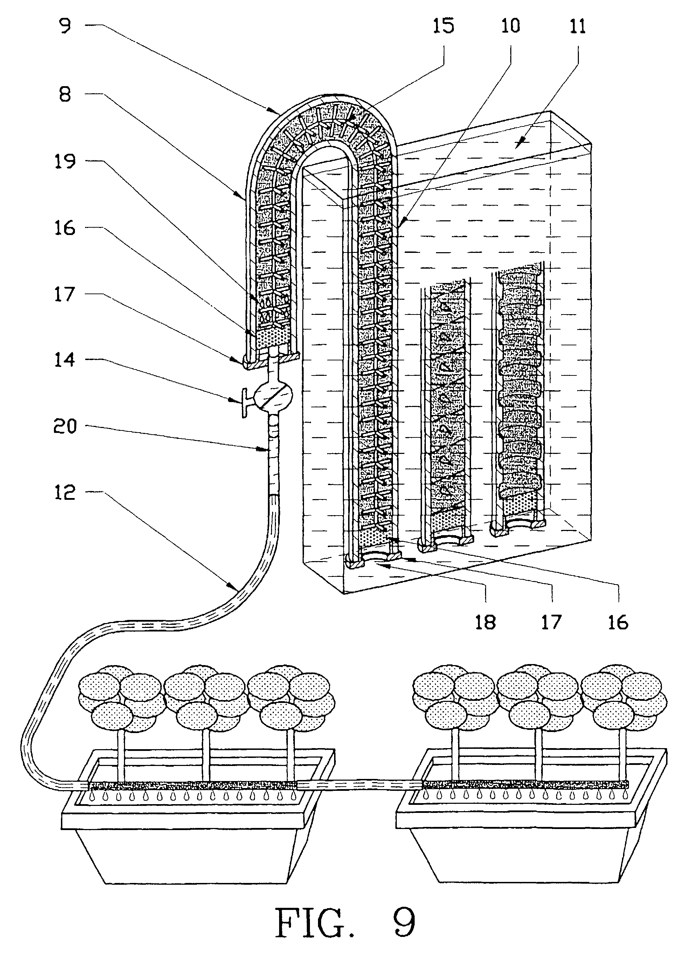

Les Figures 6 à 11 représentent d'autres variantes du dispositif d'arrosage selon l'invention;
La Figure 12 représente un autre application du dispositif selon l'invention; et
La Figure 13 représente encore une autre variante d'un dispositif d'arrosage selon l'invention.

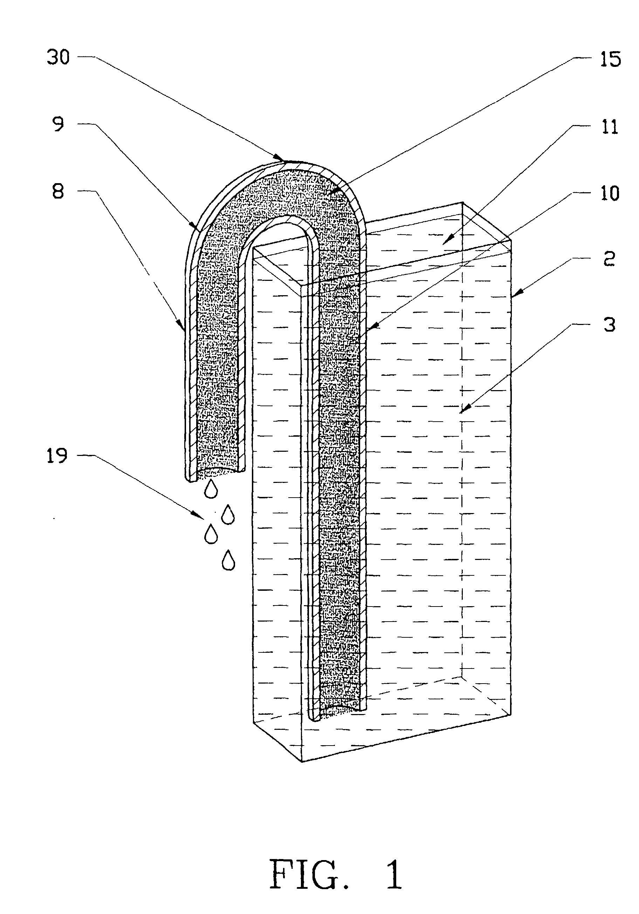

La Figure 1 représente un dispositif connu constitué d'un tube (9) en forme de U qui contient une matière hydrophile (15).

Lorsqu'on plonge la branche (10) du U dans un liquide (3), sa partie immergée se remplit rapidement jusqu'au niveau (11).

Le liquide monte ensuite par capillarité et mouille complètement la matière hydrophile (15). Le liquide entraîné par son poids dans la branche (8) du U, arrive à son extrémité et sort sous forme de gouttes (19).

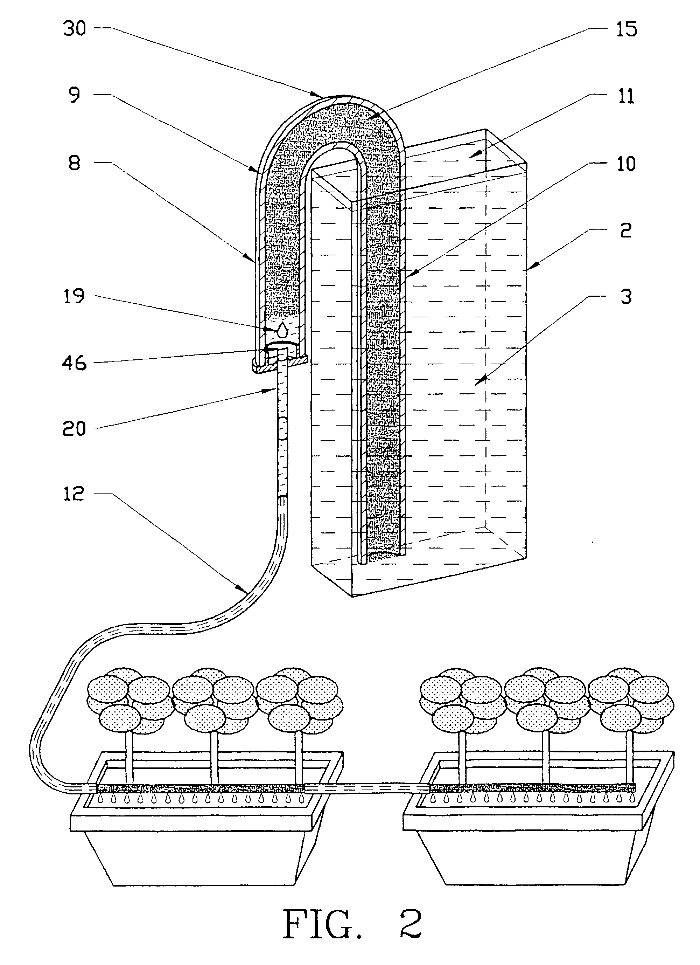

La figure 2 représente un dispositif selon l'invention, dans lequel la branche (8) du tube (9) est prolongée par un tuyau (12) de diamètre intérieur plus petit que le diamètre du tube (9).

Les gouttes (19) de liquide tombent à l'entrée (46) du tuyau (12).

Si le tuyau (12) a un diamètre suffisamment petit pour que le liquide ne ruisselle pas, celui-ci reste à l'entrée du tuyau (12) où il forme un bouchon.

Lorsqu'une ou plusieurs gouttes sont tombées et que la hauteur de liquide est suffisante pour que sa pression soit supérieure'à la force de résistance de la tension superficielle, le liquide est forcé de s'engager dans le tuyau (12) où il forme une colonne (20) qui descend, provocant une dépression.

Cette dépression entraîne des bulles d'air qui descendent dans le tuyau. Les gouttes continuant à arriver à l'entrée du tuyau (12), des petites colonnes (20) de liquide se succèdent dans le tuyau (12) augmentant la dépression.

Des bulles d'air s'intercalent entre les colonnes de liquide et s'évacuent à l'extrémité libre du tuyau (12).

Cet air évacué est remplacé par du liquide dont le niveau monte dans la branche (10) du tube (9).

Lorsque le niveau de ce liquide atteint le niveau supérieur (30), il se déverse dans la branche (8) et alimente le tuyau (12) de façon beaucoup plus abondante qu'une simple mèche.

On constate que le débit dans le tuyau (12) devient important, et fonction de la hauteur de chute, car le dispositif fonctionne alors en siphon.

Lorsque le système est stabilisé en régime de fonctionnement, il n'évacue plus de bulles d'air. On constate que dans la branche descendante (8) il reste de l'air, ce qui n'empêche pas le fonctionnement, car dans cette branche, le liquide ruisselle, et la partie aspirante du siphon ne commence qu'au départ du tuyau (12).

Si le liquide est de l'eau, il faut un diamètre du tuyau (12) de préférence inférieur ou égal à 6 mm.

Des diamètres du tuyau (12) de l'ordre de 2, 3 ou 4 mm fonctionnent très bien. Un diamètre de 5 ou 6 mm est moins favorable à la formation d'une colonne d'eau.

En effet, l'eau a tendance à ruisseler, ce qui est sans effet sur l'amorçage du siphon.

Ce défaut peut être en partie corrigé par le choix de la matière constituant le tuyau (12). Par exemple une paroi interne légèrement dépolie, favorise l'accrochage de l'eau, donc peut empêcher son ruissellement.

Pour un diamètre du tuyau (12) inférieur à 2 mm l'écoulement de l'eau est plus difficile, et le volume d'air aspiré étant plus réduit, l'amorçage du siphon est plus long, plus aléatoire, voire même impossible pour un diamètre inférieur à 1 mm.

Une autre caractéristique importante de l'invention est que, lorsque la matière hydrophile (15) est mouillée (soit que le siphon ait déjà servi, soit qu'on l'ait mouillé volontairement en trempant l'appareil dans l'eau), l'amorçage du siphon est beaucoup plus rapide.

En effet, lorsqu'on plonge la branche (10) dans le liquide, celui-ci y pénètre et monte jusqu'au niveau (11), chassant l'air qui y était contenu. Cet air en s'échappant par la branche (8) et le tuyau (12) entraîne dans celui-ci quelques gouttes d'eau qui forment des colonnes qui accélèrent l'amorçage du siphon. De plus le temps qui aurait été nécessaire pour mouiller la matière hydrophile est supprimé puisque celle-ci est déjà mouillée.

Dans le cas où on choisit de mouiller préalablement la matière hydrophile, on peut accélérer l'amorçage du siphon en augmentant la quantité d'eau retenue à l'intérieur de la branche (8) du U. Ce résultat peut être obtenu en augmentant la quantité de matière hydrophile contenue dans la branche descendante (8) du U.

Il pourra donc être intéressant d'augmenter le volume de la branche 8 par exemple en l'allongeant et/ou en l'élargissant.

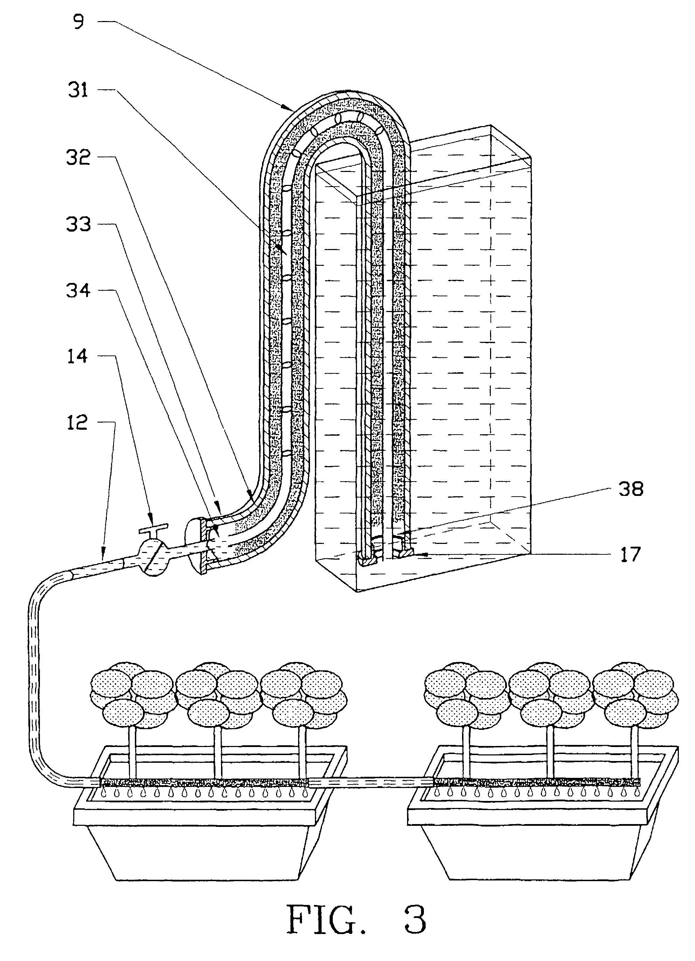

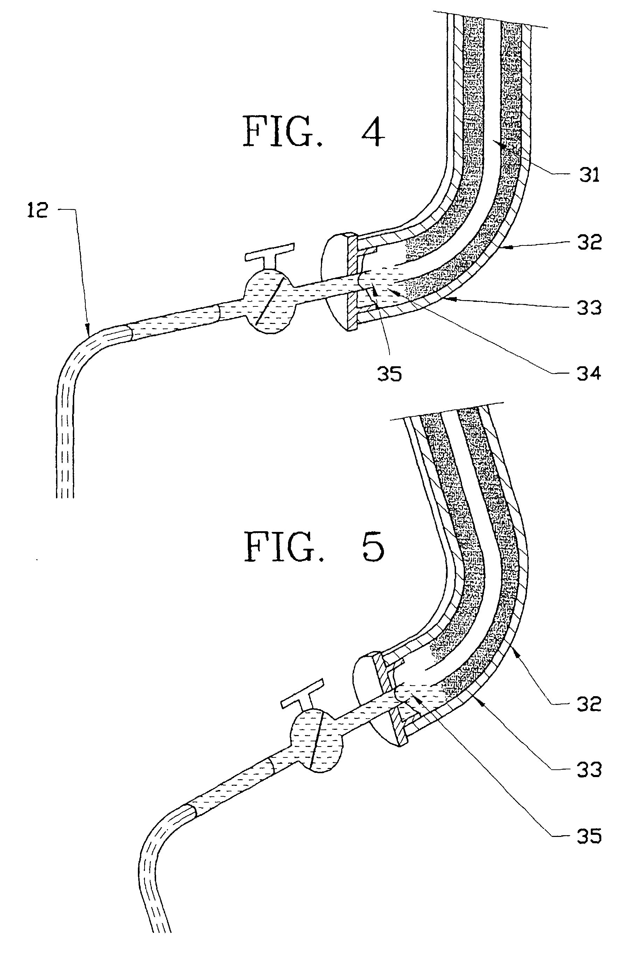

On peut encore augmenter la quantité d'eau retenue à l'intérieur du dispositif grâce à une caractéristique importante de l'invention qui est que la branche (8) du tube (9) comporte à son extrémité un coude (32) et une petite partie horizontale (33) qui forme une chambre (34) destinée à conserver une réserve d'eau lorsqu'on a mouillé préalablement le dispositif ou lors du désamorçage du siphon (fig. 3 et fig. 4).

Dans une autre variante, à l'intérieur de cette chambre (34) un prolongement (35) du tuyau (12) empêche une partie de l'eau de sortir lorsqu'en manipulant le système on incline la partie (33) par rapport à l'horizontale (fig. 5).

Il est intéressant que la longueur du prolongement (35) soit suffisante pour conserver assez d'eau dans la chambre (34) pour qu'il s'en écoule un peu par le tuyau (12) lors de la remise à l'horizontale de la partie (33).

Cette eau, chassée dans le tuyau (12) par la pression lorsqu'on plonge la branche (10) dans la réserve d'eau, donne par sa chute une impulsion au démarrage du siphon (effet de starter).

Avec ce dispositif, l'amorçage du siphon peut se faire même dans des conditions défavorables.

Par exemple lorsque le niveau (11) du liquide est trop bas par rapport au niveau (30) pour un amorçage par capillarité, le siphon peut tout de même être amorcé en plongeant la branche (10) partiellement dans l'eau.

En cas de désamorçage du siphon dû au manque d'eau dans le réservoir, cette caractéristique permet un réamorçage rapide dès que le niveau de l'eau remonte suffisamment. Ceci même après plusieurs semaines de sécheresse, car l'eau contenue à l'intérieur du tube a très peu de possibilité de s'évaporer.

### Variantes

Le diamètre du tube (9) doit être supérieur à celui du tuyau (12), car il doit contenir la matière hydrophile, et de plus comporter suffisamment de vide pour laisser passer l'eau lorsque le siphon est amorcé.

Avec un trop gros diamètre du tube 9, et plus particulièrement de la branche montante 10, le volume d'air à évacuer est important, ce qui augmente le temps d'amorçage.
Un diamètre trop petit réduit le débit.

Des essais ont été réalisés avec un diamètre de 12 mm qui permet d'introduire la matière hydrophile, sans trop la serrer.

Il est intéressant que la matière hydrophile ait un diamètre légèrement inférieur au diamètre intérieur pour laisser un vide favorisant un bon débit d'eau lorsque le siphon est en fonctionnement.

Avec un tube (9) de diamètre intérieur 12 mm nous avons procédé aux 2 essais suivants :
- Avec la matière hydrophile de 12 mm de diamètre, qui rempli donc complètement le tube, un tuyau (12) de 4 mm de diamètre et une différence de hauteur de 80 cm, le débit est de 2 litres par heure.
- Toutes choses égales par ailleurs on remplace la matière hydrophile de 12 mm par une de 10 mm de diamètre, on a alors un débit de 11 litres par heure.

Si pour bien visualiser le fonctionnement on utilise un tube (9) transparent on voit l'eau circuler dans l'espace libre entre le tube (9) et la matière hydrophile.

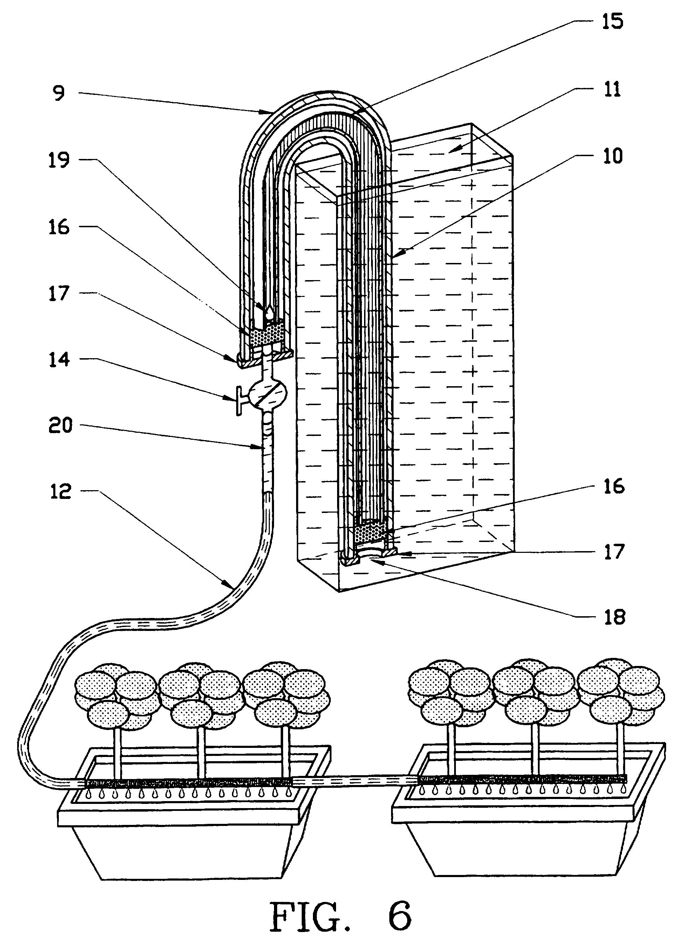

Dans des variantes de réalisation du dispositif selon l'invention, on peut délimiter de façon plus précise deux chemins pour l'eau (fig.6).

La matière hydrophile entourée d'une enveloppe souple et imperméable, ouverte aux deux bouts, est introduite dans le tube (9) avec un jeu entre l'enveloppe souple et l'intérieur du tube (9). L'eau circule donc dans un premier chemin qui est la mèche enfermée dans son enveloppe ; Cette eau se déplaçant par capillarité arrive à l'entrée du tuyau (12) et sert à amorcer le siphon et ensuite lorsque le siphon est amorcé, l'eau circule principalement dans un deuxième chemin qui est l'espace délimité par l'intérieur du tube (9) d'une part et l'extérieur de l'enveloppe souple d'autre part.

Le temps d'amorçage du siphon dépend entre autres de la quantité d'air à éliminer dans la branche montante (10) du tube (9). On a donc intérêt à ce que cette quantité d'air soit la plus petite possible, donc il vaut mieux bien délimiter le volume du chemin libre qui sert à l'écoulement de l'eau aspirée.

Pour ce faire, dans une autre variante (fig. 3), on utilise un tuyau (31) d'un diamètre sensiblement inférieur au diamètre intérieur du tube (9) et qui est placé à l'intérieur de celui-ci, sur toute la longueur de la matière hydrophile. La matière hydrophile comblant le reste du vide entre le tube (9) et le tuyau (31).

Dans l'exemple représenté sur la fig. 3, qui est le meilleur mode de réalisation de l'invention, le tube (9) a un diamètre de 12 mm, et le tuyau (31) un diamètre de 4mm, égal à celui du tuyau (12). Le tuyau (31) qui sert de chemin pour l'écoulement de l'eau aspirée est ainsi capable de fournir le débit nécessaire pour alimenter le tuyau (12), tout en ayant un volume intérieur petit.

La matière hydrophile occupe l'espace entre le tube (9) et le tuyau (31), ainsi la quantité d'air à éliminer est réduite d'où un amorçage plus rapide et un débit plus important.

Dans ce dispositif on peut prévoir à l'entrée du tube (9) un espace (38) entre le bouchon (17) d'une part et la matière hydrophile et le tuyau (31) d'autre part. Ceci afin de permettre à l'eau d'alimenter les 2 chemins.

Pour éviter le risque d'obstruction du tuyau (31) on peut remplacer le bouchon (17) par une grille ou un tampon de mousse.

Dans une autre variante le tuyau (31) peut être double ou multiple de façon à accroître le débit.

Dans une autre variante le tuyau (31) peut être prolongé à l'extérieur du tube (9) du côté de la branche (10) de façon à pouvoir aller aspirer le liquide dans un point plus profond du récipient (2).

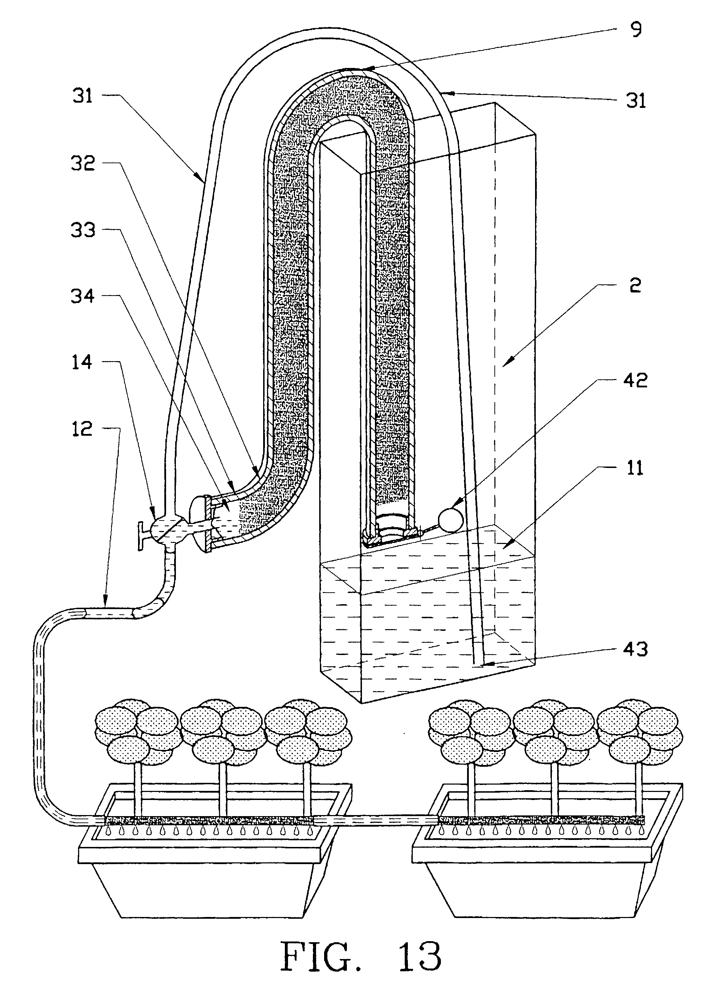

Dans une autre variante représentée figure 13, le tuyau (31) est placé à l'extérieur du tube (9) et ii est raccordé soit dans la chambre (34) soit directement dans le prolongement du tuyau (12), grâce à un raccord en forme de T ou un robinet (14).

Pour empêcher le désamorçage du siphon qui serait provoqué par de l'air entrant dans le tube (9) et passant à travers de la matière hydrophile, on peut prévoir un dispositif qui ferme le tube (9) lorsque le niveau de l'eau baisse au point de risquer de ne plus immerger l'entrée du tube (9), tout en laissant ouvert le tuyau (31).

Si le tuyau (31) est extérieur au tube (9) il est facile de prévoir à l'entrée de la branche un clapet à flotteur (42) qui se ferme lorsque l'eau atteint un niveau prédéterminé (fig. 13).

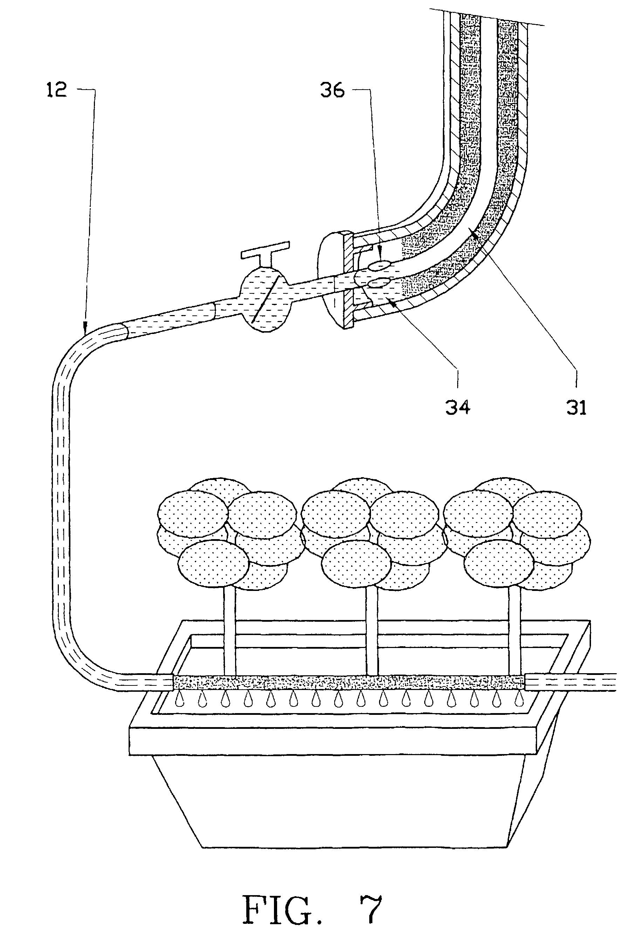

Lorsque le siphon est amorcé et que le clapet à flotteur (42) est fermé, le siphon reste en action tant que le niveau (11) du liquide ne descend pas au dessous de l'extrémité (43) du tuyau (31).
Dans une autre variante représentée fig. 7, le tuyau (31) et le tuyau (12) sont formés d'un seul tube continu. Un ou plusieurs trous (36) sont pratiqués dans ce tuyau dans sa partie traversant la chambre (34). Lorsque, par capillarité, à travers la matière hydrophile, l'eau arrive dans la chambre (34) et la remplit jusqu'à atteindre le ou les trous (36), elle s'engage dans le tuyau (12), en descendant, elle provoque une aspiration dans le tuyau (31). L'eau se met alors à circuler dans le tuyau (31) pour alimenter le tuyau (12). Le siphon se met à fonctionner.

Une caractéristique importante du dispositif représenté sur la figure 3 est que le tuyau (31), une fois qu'il est rempli d'eau fonctionne en siphon tant que le niveau (11) du liquide dans le réservoir est supérieur au niveau de sortie du tuyau (31).

On a donc un siphon constitué par le tuyau (31) et dont le potentiel d'aspiration s'ajoute à celui du tuyau (12).

Ceci est intéressant lorsque la hauteur de chute disponible est petite, (par exemple si le réservoir est un réservoir de chasse d'eau de W-C, et que les plantes à arroser sont des bacs disposés sur le sol).

Dans tous les cas cités plus haut, on peut disposer un robinet (14) sur le tuyau (12), de façon à pouvoir régler le débit.

Dans une variante de réalisation, la matière hydrophile (15) peut être une matière granuleuse telle que du sable.

Pour laisser passer l'eau, cette matière granuleuse ne doit être que légèrement compactée. Il en résulte qu'elle peut bouger à l'intérieur du tube (9), ce qui produit un espace vide, et l'eau ne franchit pas cette discontinuité.

Pour éviter cet inconvénient, une caractéristique importante de l'invention est que le sable est stabilisé à l'intérieur du tube grâce à une structure qui le maintient en place.

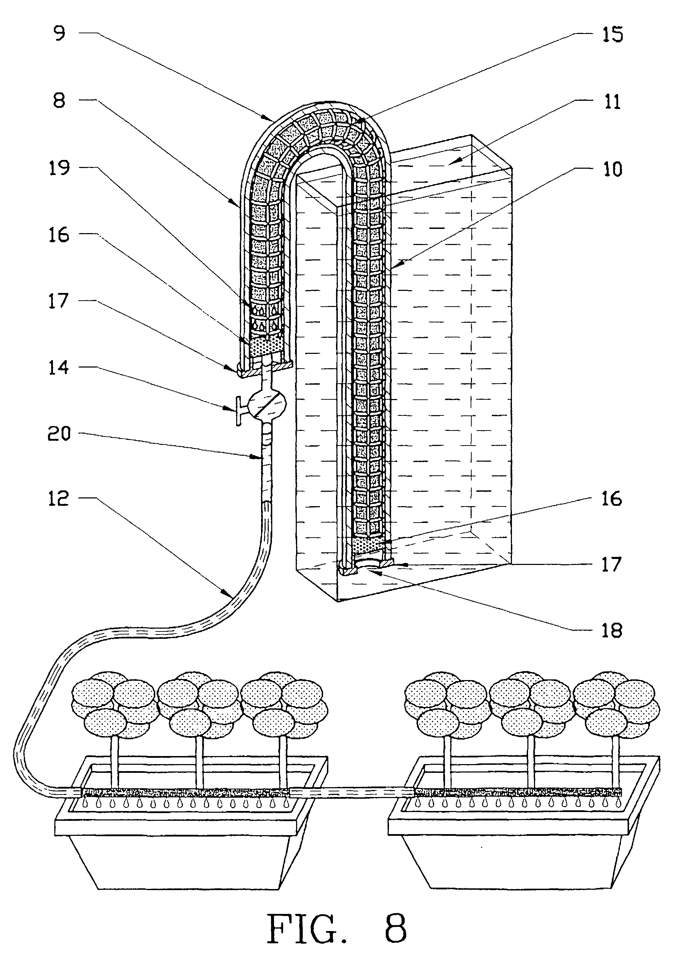

Dans l'exemple de réalisation représenté fig.8, le sable est stabilisé grâce à un tube en grillage semi-rigide (par exemple du plastique) de mailles comprises entre 2 et 6 mm introduit à l'intérieur du tube (9).

Mais d'autres dispositifs peuvent être utilisés, par exemple une paroi interne du tube rendue rugueuse, ou revêtue de picots (fig; 9), de saillies, ou de cannelures.

Il est avantageux que le tube rempli de sable soit transparent pour pouvoir contrôler si il est bien rempli avec la matière granuleuse.

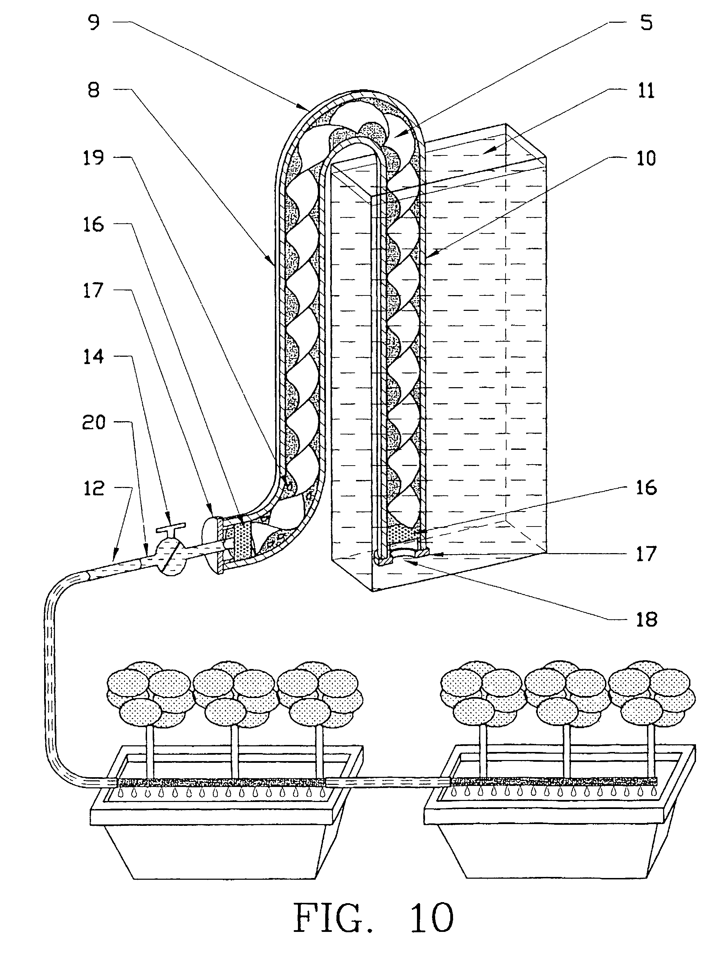

Dans le cas de la figure 10, la matière granuleuse (15) est stabilisée par un élément (5) en plastique semi-rigide formé à partir d'un feuillard qui a été torsadé, et qui est ensuite introduit dans le tube.

Ce feuillard torsadé est suffisamment souple pour pouvoir être introduit dans la crosse et suivre ses courbures.

Le feuillard de la figure 10 a une largeur de 10 mm. Il est réalisé avec un thermoplastique qui est torsadé à chaud pour obtenir une forme hélicoïdale de pas égal à 16 mm.

Il est introduit à l'intérieur d'une crosse d'un diamètre intérieur de 12 mm. Il existe un léger jeu entre les bords du feuillard torsadé (5) et l'intérieur du tube. La matière granuleuse est ensuite introduite facilement à l'intérieur du dispositif car elle tourne autour de la spirale.

Le tube formant la crosse des exemples précédents est fermé à ses deux extrémités par des filtres hydrophiles par exemple un tampon en mousse 16 dont les canaux sont de dimensions inférieures à celles des grains les plus petits de la matière granuleuse.

Ces filtres hydrophiles sont maintenus en place par des bouchons (17) comportant en leur centre une ouverture (18).

L'ouverture de l'un des deux bouchons est de dimension compatible avec la vanne (14) qui vient s'emboîter dedans.

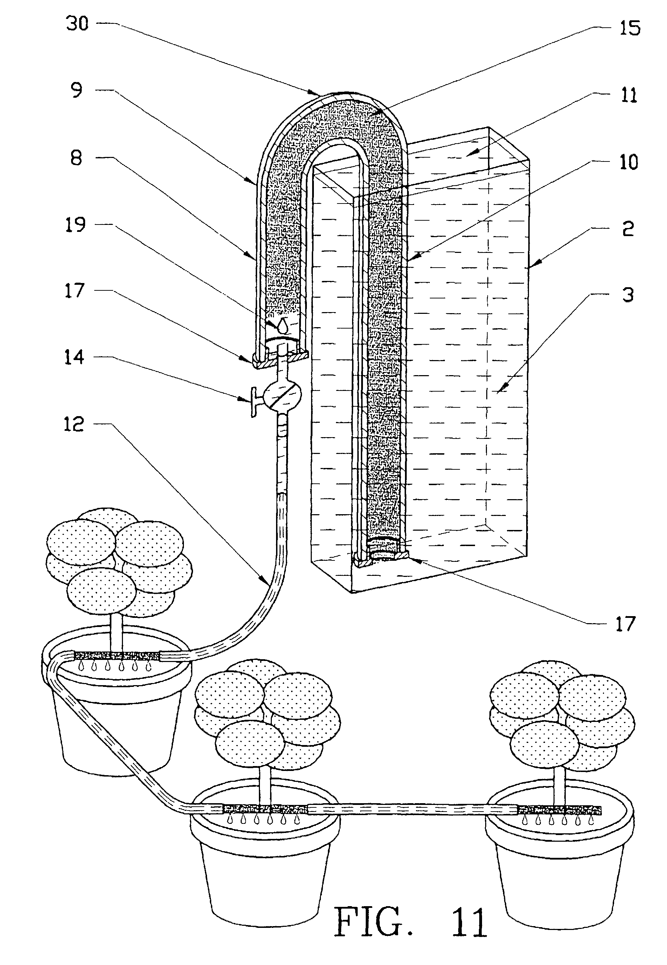

Puisqu'il est avantageux, lorsque le siphon est désamorcé, de conserver le plus d'eau possible à l'intérieur du tube, afin d'accélérer le réamorçage, le tube (9) est fermé à ses extrémités par des bouchons (17) comportant seulement un trou de diamètre égal à celui du tuyau (12) (figure 11).

Le siphon auto-amorçant objet de l'invention est utilisé dans de nombreux cas où on a besoin d'amener un liquide contenu dans un récipient (2) vers un ou plusieurs autres points de distribution.

Le siphon selon l'invention est destiné à l'arrosage de végétaux, par exemple à partir d'un réservoir à niveau constant, type « chasse d'eau » - le débit étant réglé grâce au robinet (14) de zéro à plusieurs centaines de litres par jour, selon la quantité de plantes à arroser.

L'extrémité du tuyau par laquelle l'eau s'écoule peut être prolongée par un tuyau poreux qui peut être vide, ou rempli de sable. Ainsi l'écoulement ne se fera pas en un seul point, mais sur toute la longueur du tuyau poreux. Ceci sera destiné à l'arrosage de récipients de forme allongée, tels que jardinières.

Le tuyau poreux peut être en textile ou caoutchouc de façon à être souple.

Le dispositif objet de l'invention peut aussi servir de trop plein pour des récipients par exemple les aquariums, ou simplement pour les vidanger.

Le tube (9) dans les exemples ci-dessus est en matière rigide ou semi-rigide mais il peut être aussi un tuyau souple contenant de la matière hydrophile, qui est éventuellement traversée par un tuyau (31).

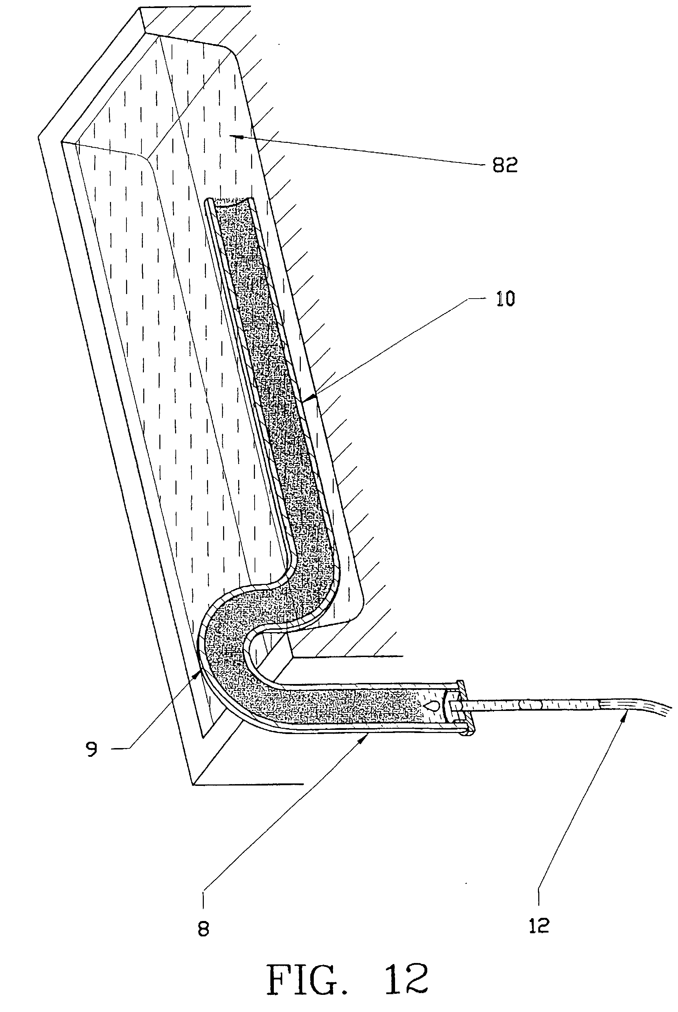

Il peut alors être utilisé pour vider des flaques d'eau sur des terrasses (82) figure 12.

La partie (10) du tuyau (9) peut alors être mise à courir sur la terrasse jusqu'au point le plus bas de cette terrasse, l'autre partie (8) prolongée par le tuyau (12) étant mise à pendre à l'extérieur de la terrasse.

Ce dispositif peut être utilisé de même pour vider les flaques sur des bâches, par exemple de piscine.

## Revendications

1. Siphon auto-amorçant formé d'un tube (9) dont la forme est proche de celle d'un U renversé, à l'intérieur duquel se trouve de la matière hydrophile comportant une branche montante (10), un coude et une branche descendante (8), caractérisé par le fait que la branche descendante (8) est prolongée par un tuyau (12) de diamètre plus petit que le diamètre du tube (9), de telle sorte que lorsque la branche montante (10) du tube (9) est plongée dans un récipient (2) contenant un liquide (3), et que celui-ci remplit la branche montante (10) du tube (9) jusqu'au niveau supérieur (11) dudit liquide, puis continue son ascension par capillarité pour franchir le point haut (30) du tube (9) et redescendre dans la branche descendante (8) jusqu'au tuyau (12), il y forme des colonnes (20), qui entraînées par leur poids provoquent une aspiration amorçant le siphon, si le niveau de sortie du tuyau (12) est plus bas que le niveau (11) du liquide.

2. Siphon selon la revendication 1 caractérisé par le fait que le tube (9) est en matière souple lui permettant d'adapter la forme du U renversé à la forme du récipient (2).

3. Siphon selon la revendication 1 caractérisé par le fait que le tube (9) est en matière rigide ou semi-rigide.

4. Siphon selon l'une quelconque des revendications précédentes, caractérisé par le fait qu'il est prévu deux chemins séparés pour la circulation du liquide:
. un chemin contenant la matière hydrophile dans lequel le liquide circule par capillarité;
. un chemin libre dans lequel s'écoule la plus grande partie du liquide qui est aspirée lorsque le siphon est amorcé.

5. Siphon selon la revendication 4 caractérisé par le fait que le chemin libre est constitué par l'espace délimité entre la paroi interne du tube (9) et la matière hydrophile, éventuellement contenue dans une enveloppe étanche ouverte aux deux bouts.

6. Siphon selon la revendication 4 caractérisé par le fait que le chemin libre est constitué par un ou plusieurs tuyaux de diamètre notablement plus petit que celui du tube (9), et circulant à l'intérieur ou à côté de la matière hydrophile.

7. Siphon selon la revendication 4 caractérisé par le fait que le chemin libre est constitué par un tuyau (31) placé à l'extérieur du tube (9), et raccordé ensuite au tuyau (12) ou à la chambre (34).

8. Siphon selon l'une quelconque des revendications précédentes caractérisé par le fait que la branche descendante (8) du tube (9) comporte à son extrémité un coude (32) et une petite partie horizontale (33) qui forme une chambre (34) destinée à conserver une réserve de liquide lors du désamorçage du siphon.

9. Siphon selon la revendication 8 caractérisé par le fait que à l'intérieur de la chambre (34) un prolongement (35) du tuyau (12) permet de conserver une partie du liquide dans la chambre (34).

10. Siphon selon la revendication 8 caractérisé par le fait que les tuyaux (31) et (12) sont formés d'un seul tube continu, comportant au niveau de la chambre (34), un ou plusieurs trous (36) permettant au liquide arrivant par capillarité dans la chambre (34) d'entrer dans le tuyau (12).

11. Siphon selon l'une quelconque des revendications 5 à 10 caractérisé par le fait que le tuyau (31) est prolongé à l'extérieur du tube (9) du côté de la branche montante (10) de façon à pouvoir atteindre un point plus profond du récipient (2).

12. Siphon selon la revendication précédente caractérisé par le fait qu'il est prévu un moyen pour obturer le tube (9) tout en laissant ouvert le tuyau (31), lorsque le liquide baisse et approche le niveau de l'entrée du tube (9).

13. Siphon selon la revendication précédente caractérisé par le fait que le tuyau (31) étant placé à l'extérieur du tube (9), un clapet à flotteur (42) ferme l'entrée de la branche montante du tube (9) lorsque le liquide atteint un niveau prédéterminé.

14. Siphon selon l'une quelconque des revendications précédentes caractérisé par le fait que tout ou partie de la branche descendante (8) présente un plus grand volume que la branche montante (10), de façon à contenir plus de matière hydrophile, afin de constituer un réservoir pour le liquide destiné au réamorçage du siphon.

15. Siphon selon l'une quelconque des revendications précédentes caractérisé par le fait que la matière hydrophile est de la matière granuleuse telle que du sable.

16. Siphon selon l'une quelconque des revendications précédentes caractérisé par le fait que la matière granuleuse est stabilisée à l'intérieur du tube (9) par une structure telle que grillage, torsade, picots ou saillies ou cannelures.

17. Siphon selon l'une quelconque des revendications précédentes caractérisé par !e fait que le diamètre du tuyau (12) est compris entre 1 et 6 mm.

18. Siphon selon l'une quelconque des revendications précédentes caractérisé par le fait que le diamètre du tuyau (12) est compris entre 2 et 5 mm.

19. Siphon selon l'une quelconque des revendications précédentes caractérisé par le fait que le diamètre du tuyau (12) est proche de 4mm.

20. Siphon selon l'une quelconque des revendications précédentes caractérisé par le fait qu'on dispose sur le tuyau (12) un robinet permettant de régler le débit.

## Claims

1. Self-priming siphon formed by a tube (9) whose shape is similar to that of an inverse U, inside which is found hydrophilic material, comprising a rising branch (10), a bend and a descending branch (8), characterized by the fact that the descending branch (8) is extended by a pipe (12) with a smaller diameter than the diameter of the tube (9) in such a manner that when the rising branch (10) of the tube (9) is plunged into a receptacle (2) containing a liquid (3), and the latter fills the rising branch (10) of the tube (9) up to the upper level (11) of said liquid, then continues its ascension by capillary action to cross the high point (30) of the tube (9) and fall again in the descending branch (8) down to the pipe (12), it forms columns (20) therein, which carried along by their weight, cause a suction priming the siphon, if the level of the exit of the pipe (12) is lower than the level (11) of the liquid.

2. Siphon according to claim 1, characterized by the fact that the tube (9) is made of a supple material, permitting it to adapt the inverted U shape to the shape of the receptacle (2).

3. Siphon according to claim 1, characterized by the fact that the tube (9) is made of a rigid or semi-rigid material.

4. Siphon according to any of the preceding claims, characterized by the fact that two separate paths are provided for the circulation of the liquid:
- a path containing the hydrophilic material in which the liquid circulates by capillary action;
- a free path in which flows the greater part of the liquid which is sucked up when the siphon is primed.

5. Siphon according to claim 4, characterized by the fact that the free path is constituted by the space delimited between the internal wall of the tube (9) and the hydrophilic material, possibly contained in a leak-proof envelope open at the two ends.

6. Siphon according to claim 4, characterized by the fact that the free path is constituted by one or more pipes with a diameter significantly smaller than that of the tube (9), and circulating inside or beside the hydrophilic material.

7. Siphon according to claim 4, characterized by the fact that the free path is constituted by a pipe (31) placed outside the tube (9), and then connected to the tube (12) or to chamber (34).

8. Siphon according to any of the preceding claims, characterized by the fact that the descending branch (8) of the tube (9) comprises at its end a bend (32) and a small horizontal portion (33) which forms a chamber (34) intended to hold a reserve of liquid during the draining of the siphon.

9. Siphon according to claim 8, characterized by the fact that inside chamber (34), an extension (35) of the pipe (12) makes it possible to retain a portion of the liquid in the chamber (34).

10. Siphon according to claim 8, characterized by the fact that the pipes (31) and (12) are formed by a single continuous tube, comprising at the level of chamber (34) one or more holes (36) permitting liquid arriving by capillary action in chamber (34) to enter the pipe (12).

11. Siphon according to anyone of claims 5 to 10, characterized by the fact that the pipe (31) is extended outside the tube (9) on the side of the rising branch (10) so as to be able to reach a deeper point of the receptacle (2).

12. Siphon according to the preceding claim, characterized by the fact that means are provided for blocking the tube (9) whilst leaving the pipe (31) open, when the liquid drops and approaches the level of the entrance of the tube (9).

13. Siphon according to the preceding claim, characterized by the fact that the pipe (31) being placed outside the tube (9), a float valve (42) closes the entrance of the rising branch of the tube (9) when the liquid reaches a pre-determined level.

14. Siphon according to one of the preceding claims, characterized by the fact that all or part of the descending branch (8) presents a greater volume than the rising branch (10), in such a way as to contain more hydrophilic material, in order to constitute a reservoir for the liquid intended for re-priming the siphon.

15. Siphon according to one of the preceding claims, characterized by the fact that the hydrophilic material is granular material such as sand.

16. Siphon according to anyone of the preceding claims, characterized by the fact that the granular material is stabilised inside tube (9) by a structure such as a netting, a twisted part, spikes or projections or grooves.

17. Siphon according to anyone of the preceding claims, characterized by the fact that the diameter of the pipe (12) is between 1 and 6 mm.

18. Siphon according to anyone of the preceding claims, characterized by the fact that the diameter of the pipe (12) is between 2 and 5 mm.

19. Siphon according to anyone of the preceding claims, characterized by the fact that the diameter of the pipe (12) is close to 4 mm.

20. Siphon to anyone of the preceding claims, characterized by the fact that there is disposed on the pipe (12) a tap making it possible to adjust the rate of flow.

## Patentansprüche

1. Selbstansaugender Siphon bestehend aus einem Rohr (9), das annähernd eine umgekehrte U-Form hat, in dessen Inneren sich ein hydrophiles Material befindet, mit einem Steigarm (10), einem Krümmer und einem Fallarm (8), dadurch gekennzeichnet, dass der Fallarm (8) verlängert ist durch einen Schlauch (12) mit kleinerem Durchmesser als der Durchmesser des Rohres (9), damit wenn der Steigarm (10) in einen Behälter (2), der eine Flüssigkeit (3) enthält getaucht wird und diese den Steigarm (10) des Rohres (9) bis zum oberen Pegel (11) der Flüssigkeit füllt, dann weiter durch Kapillarität ansteigt, die höchste Stelle (30) des Rohres (9) überschreitet und in dem Fallarm (8) wieder nach unten bis zu dem Schlauch (12) fliesst, die Flüssigkeit in dem Schlauch Kolonnen (20) bildet, welche, angetrieben durch ihr Gewicht, eine Ansaugung zum Anlassen des Siphons erzeugen, wenn der Auslass des Schlauches (12) niedriger ist als der Pegel (11) der Flüssigkeit.

2. Siphon nach Anspruch 1, dadurch gekennzeichnet, dass das Rohr (9) aus weichem Werkstoff besteht, damit die umgekehrte U-Form an die Form des Behälters (2) angepasst werden kann.

3. Siphon nach Anspruch 1, dadurch gekennzeichnet, dass das Rohr (9) aus steifem oder halbsteifem Werkstoff besteht.

4. Siphon nach einem beliebigen der vorhergehenden Ansprüche, dadurch gekennzeichnet, dass zwei separate Wege für die Strömung der Flüssigkeit vorgesehen sind:
- einen Weg, der das hydrophile Material enthält, in dem das Wasser durch Kapillarität fliesst;
- einen freien Weg in dem der grösste Teil der Flüssigkeit strömt, die angesaugt wird wenn der Siphon angelassen ist.

5. Siphon nach Anspruch 4, dadurch gekennzeichnet, dass der freie Weg aus dem Raum besteht, der eingeschlossen ist zwischen der inneren Wand des Rohres (9) und dem hydrophilen Material, gegebenenfalls eingeschlossenen in einer dichten Hülle, die an beiden Enden offen ist.

6. Siphon nach Anspruch 4, dadurch gekennzeichnet, dass der freie Weg gebildet ist durch einen oder mehrere Schläuche, welche einen wesentlichen kleineren Durchmesser aufweisen als das Rohr (9), und innerhalb oder neben dem hydrophilen Material verlaufen.

7. Siphon nach Anspruch 4, dadurch gekennzeichnet, dass der freie Weg durch einen Schlauch (31) gebildet ist, der ausserhalb des Rohres (9) verläuft und anschliessend an den Schlauch (12) oder an eine Kammer (34) angeschlossen ist.

8. Siphon nach einem beliebigen der vorhergehenden Ansprüche, dadurch gekennzeichnet, dass der Fallarm (8) des Rohres (9) an seinem unteren Ende ein Kniestück (32) und einen kleinen horizontalen Teil (33) aufweist, der eine Kammer (34) bildet zum Zurückhalten eines Flüssigkeitsvorrats beim Leerlaufen des Siphons.

9. Siphon nach Anspruch 8, dadurch gekennzeichnet, dass im Inneren der Kammer (34) eine Verlängerung (35) des Schlauches (12) dazu dient einen Teil der Flüssigkeit in der Kammer (34) zurückzuhalten.

10. Siphon nach Anspruch 8, dadurch gekennzeichnet, dass die Schläuche (31) und (12) aus einem einzigen durchgehenden Schlauch bestehen, der auf der Höhe der Kammer (34) ein der mehrere Löcher (36) aufweist, damit die durch Kapillarität in die Kammer (34) einströmende Flüssigkeit in den Schlauch (12) gelangen kann.

11. Siphon nach einem der Ansprüche 5 bis 10, dadurch gekennzeichnet, dass der Schlauch (31) ausserhalb des Rohres (9) auf der Seite des Steigarmes (10) verlängert ist, damit er eine tiefere Stelle im Behälter (2) erreichen kann.

12. Siphon nach dem vorhergehenden Anspruch, dadurch gekennzeichnet, dass eine Einrichtung vorgesehen ist zum Verschliessen des Rohres (9) unter Offenlassen des Schlauches (31), wenn der Flüssigkeitsstand sinkt und die Höhe des Einlasses des Rohres (9) erreicht.

13. Siphon nach dem vorhergehenden Anspruch, dadurch gekennzeichnet, dass bei ausserhalb des Rohres (9) angeordnetem Schlauch (31) ein Schwimmerventil (42) den Eingang des Steigarmes des Rohres (9) verschliesst wenn die Flüssigkeit einen vorbestimmten Pegelstand erreicht.

14. Siphon nach einem beliebigen der vorhergehenden Ansprüche, dadurch gekennzeichnet, dass der gesamte Fallarm (8) oder ein Teil desselben ein grösseres Volumen aufweist als der Steigarm (10), um mehr hydrophiles Material aufnehmen zu können zum Schaffen eines Speichers für die Flüssigkeit zum Wiederanlassen des Siphons.

15. Siphon nach einem beliebigen der vorhergehenden Ansprüche, dadurch gekennzeichnet, dass das hydrophile Material ein körniges Material wie z.B. Sand ist.

16. Siphon nach einem beliebigen der vorhergehenden Ansprüche, dadurch gekennzeichnet, dass das körnige Material innerhalb des Rohres (9) stabilisiert ist durch eine Struktur wie z.B. ein Gitterwerk, ein gewundener Teil, Zähne oder Vorsprünge oder Riefen.

17. Siphon nach einem beliebigen der vorhergehenden Ansprüche, dadurch gekennzeichnet, dass der Durchmesser des Schlauches (12) zwischen 1 und 6 mm liegt.

18. Siphon nach einem beliebigen der vorhergehenden Ansprüche, dadurch gekennzeichnet, dass der Durchmesser des Schlauches (12) zwischen 2 und 5 mm liegt.

19. Siphon nach einem beliebigen der vorhergehenden Ansprüche, dadurch gekennzeichnet, dass der Durchmesser des Schlauches (12) etwa 4 mm beträgt.

20. Siphon nach einem beliebigen der vorhergehenden Ansprüche, dadurch gekennzeichnet, dass am Schlauch (12) ein Durchflussregelventil vorgesehen ist.
